# EUROPEAN PATENT SPECIFICATION

(11) **EP 2 415 200 B1**
(45) Date of publication and mention of the grant of the patent: **24.01.2018**
(21) Application number: 09786503.4
(22) Date of filing: 02.07.2009
(51) Int. Cl.: H04W 12/10, H04L 9/32

(54) **METHOD AND SYSTEM TO EFFECT A QUALIFIED ELECTRONIC SIGNATURE IN REMOTE MODE**
VERFAHREN UND ANORDNUNG ZUR AUSFÜHRUNG EINER QUALIFIZIERTEN ELEKTRONISCHEN SIGNATUR IN FERNBEDIENTEM MODUS
PROCÉDÉ ET SYSTÈME POUR OBTENIR UNE SIGNATURE ÉLECTRONIQUE CERTIFIÉE EN MODE DISTANT

(30) Priority: 01.04.2009 IT VR20090044
(43) Date of publication of application: 08.02.2012
(73) Proprietor: Aliaslab S.p.A., 20122 Milano (IT)
(72) Inventor: MAGAGNOTTI, Romeo, I-46100 Mantova (MN) (IT); DIANATI, Davide, I-44034 Copparo (FE) (IT)
(74) Representative: Cinquantini, Bruno
(86) International application number: PCT/IB2009/052886
(87) International publication number: WO 2010/112981

(56) References cited:
- WO-A2-02/48848
- WO-A2-03/015370
- MENEZES, VANSTONE, OORSCHOT: "Handbook of Applied Cryptography", 1997, CRC PRESS LLC, USA, XP002575489, page 386 - page 391 page 394 - page 397

## Description

This invention refers, in general, to a method and a relative system to effect a qualified electronic signature in remote mode of an electronic document. More particularly, the invention refers to a method and a relative system to effect a digital signature of an electronic document by means of a cordless telephone or other electronic device for mobile communication.

As is known, for sending electronic documents for which the receiver requests the authenticity of the signer of the document itself, the so-called "electronic signature" is utilized, that is an array of data in electronic form, enclosed or connected through a logic association with other electronic data, utilized as an electronic identification method.

For a better guarantee in the sending of signed electronic documents, the so-called "qualified electronic signature" has been introduced, that is an electronic signature based on a procedure permitting an unambiguous identification of the holder through means on which the signer must have an exclusive control, the ownership of such means being certified with a qualified certificate by a certifying agency.

Said procedure provides that the certifying agency creates, through a suited algorithm and for each signer, a pair of keys, in particular a public key and a private key, namely, a pair of related algorithms which process electronic codes.

In the sending phase of a document for which the qualified electronic signature is requested, the sender processes the document to be sent by means of a processing public algorithm and obtains an electronic code called "hash". Said "hash", in turn, is processed, that is encrypted through the algorithm in the private key so that a further electronic code, called "signature", is obtained.

The receiver of the document may verify if the document has been actually signed by the sender by utilizing the processing algorithm and the public key. In particular, the receiver may decipher the "signature" by means of the public key and obtain a first "hash"; if this operation takes place well, the authenticity of the sender is ascertained. Then, the receiver may obtain a second "hash" by processing the document send by the sender with the processing algorithm. If the two "hashes" are identical, it means that the document has not been altered.

The procedure may take place in reverse order in case the receiver sends a message so that the only signer (previously it was the sender) may have access to it. In this case, the public key referring to that signer encrypts the message that the only signature holder can decipher by means of his/her private key.

While the public key is available at the certifying agency, the private key must be kept secret in order to make substantially impossible a use by third parties apart from the signer, namely, the holder. For this reason, the private key is memorized in an electronic device that the signer keeps, such as memorizing computer discs or cards comprising particular electronic processing and memorizing devices, commonly known as "smart cards" or USB keys or other devices.

Essentially, the private key, called more simply digital certificate or digital signature certificate, is memorized in an electronic device that is kept by the user holder and is utilized locally by means of suited apparatuses: in case of a "smart card", there are provided suited readers to be connected with a personal computer or other type of computer; in case of other devices such as the USB keys or the memorizing discs, there are provided USB gates or other connecting systems for the connection with the personal computer.

Consequently, the user must always keep one or more electronic devices and verify that the computer the user intends to utilize may be connected with such devices and therefore, the utilization of the signature system according to the known art is limiting and onerous.

WO03015370 shows a scheme for providing the digital signature of a digital document through a remote server and a double connection with the server. It is specifically described in the preamble of the claim 1.

The purpose and aim of this invention is to carry out a method and a relative system to effect a qualified electronic signature in remote modality and maintain a high safety level in the signature operations.

Said purpose and other ones are achieved by a method to effect a qualified electronic signature of one or more electronic documents by more signer users by utilizing a software that operates in a computer, for instance a personal computer, a portable computer, a palmtop computer, or other similar device, connected with a remote server, each signer user being in possession of a digital signature certificate and an electronic device for mobile communication with which an identification number is associated unequivocally. The method is characterized in that the server obtains a hash of the document to be signed on receiving said hash from the computer directly after the computer has calculated the hash on the base of the electronic document or alternatively, the server itself calculates the hash on the base of the electronic document to be signed, sent to the server by the computer. The server is suited to telephonically communicate, the digital signature certificates being collected in said server, each digital signature certificate being referred to an only signer user, and in the server there is also a database in which a respective different identification code of each signer user is associated with an identification number of each electronic device for mobile communication of each user. In addition, the method according to the invention is characterized in that the computer sends an identification code of the signer user to the remote server, and that a telephone communication takes place between the sender user, through the electronic device for mobile communication, and the remote server and during said telephone communication, the remote server verifies the match between the signer user in telephone communication and the sender of the user identification code. In this way, in case of an actual match, the remote server effects the encryption of the hash through the digital signature certificate corresponding with the user in telephone communication and obtains a digital signature.

In other words, the method according to the invention permits to effect the qualified electronic signature of an electronic document without the need for the user to bring along electronic devices such as "smart cards", USB keys, memory discs, or other devices in which there is provided the private key or digital certificate, but only through the utilization of a device for mobile communication such as a conventional cordless telephone that everybody owns nowadays.

Besides, the method according to this invention provides that the qualified electronic signature operations are effected with whatever kind of computer by simply utilizing a software to be put in communication with a remote server, for instance through Internet connection. The software may be installed in a remote server and is accessible through an Internet browser in case the computer can be connected to the Internet.

Concerning the electronic device for mobile communication, it is to be intended the device itself along with the telephone subscribers bound to SIM (in case of a GSM device) or bound to USIM (in case of a UMTS device. Consequently, concerning the identification number associated to the device for mobile communication, it is to be intended the telephone number relating to the telephone subscribers (CLI / MSISDN) or other codes used by the telephone network, such as the IMSI code corresponding to the serial number of SIM or USIM, the IMEI code corresponding to the serial number of the communication device, or two or more of said codes.

The method provides that at first the hash is calculated by the software of the computer from which the signer user controls the beginning of the signature operations, and then, the hash is sent to the remote server. Otherwise, the hash may be calculated by the remote server on the base of the electronic document sent to the remote server by the computer.

Advantageously, the method according to the invention provides that once the digital signature has been calculated, the remote server may send said signature to the computer of the signer user. However, it is possible to send the so-obtained signature to a different user, chosen by the signer user, even in association with the signed electronic document, in order to hasten the sending operations of the signed document by the signer user.

According to a last possibility, the signed electronic document may be sent to a further remote server for a substitute electronic filing, centralized or remote, in compliance with the law requirements.

Advantageously, the telephone communication between the remote server and the signer user may be established as follows: after the sending of the identification code of the signer user to the remote server and the obtaining of the hash by the same remote server (after having received same from the computer that calculates the hash on the base of the electronic document, or after having calculated same on the base of the received electronic document), the remote server itself may send a telephone number to the user, or as an alternative to the computer so that the user may visualize said telephone number through the software or send the telephone number to the device for mobile communication; in this way, the user may dial the telephone number on the device for mobile communication in his/her possession and establish the communication with the remote server. During the communication, the remote server verifies, on the base of the information of its database, the match between the identification code of the signer user sent previously and the identification number of the calling device with which it has established the communication. Then, in case of match between the identification code and the identification number, the remote server encrypts the hash obtained previously by means of the digital signature certificate referring to the signer user, namely, the user who has sent the hash and has established the telephone communication, and thus, an electronic code or digital signature is created for the document in question.

In this way, it is the signer user who calls, with his/her cordless telephone or other device, the remote server the number of which has been notified to the personal computer or cordless telephone of the signer user. It is very advantageous for the handler of the system that more telephone numbers correspond to the remote server, these numbers being indicated selectively to a user who needs the electronic signature. In this way, an only system is able to handle more users at the same time.

Advantageously, the method according to the invention provides that in case of an unsuccessful match between the identification code sent to the remote server and the calling identification number, the remote server sends a message to the personal computer to notify the non-match and the impossibility of effecting the qualified electronic signature.

In addition, the method increases its safety degree in that in addition to the telephone number to be called, the remote server sends a numeric code to the computer, this numeric code being visualized by the signer user and associated to the identification number, that is one or more of the following numbers: telephone number, IMSI code, IMEI code, or other, of the device for mobile communication of the same user. Consequently, in order to effect the signature operation during the communication with the remote server, the user must stroke the previously visualized numeric code so that the remote server verifies both the match between the identification code of the signer user and the calling identification number with which the remote server has established the communication, and the match of same with the numeric code sent by the user during the communication.

In order to further increase the safety degree of the method in question, a personal secret code may be associated to each signer user who will send said code during the telephone communication with the remote server so that the server itself can verify the match between the calling identification number and the stroked personal secret code.

In order to avoid that the signer user incurs the costs for calling the remote server or to avoid that the same is prevented from effecting outgoing calls, the method of electronic signature according to this invention may provide that the remote server itself calls the telephone number associated to the identification code sent by the personal computer to the server in the beginning phase of the signature operation. In this way, it will be sufficient that the signer user replies to the call by means of the device for mobile communication corresponding to said telephone number and sends in case to the remote server, through the same telephone communication, a univocal recognizing code accorded to it before establishing the communication itself. Once the server has verified the match between the called number and the recognizing code, the server effects the encryption of the hash by means of the digital signature certificate corresponding to the user in telephone communication and obtains the digital signature.

Said univocal recognizing code may be assigned only one time in the phase of attribution of the digital signature certificate. Otherwise, said univocal recognizing code may be sent by the server to the computer after sending the hash to the server itself.

Advantageously, the method according to the invention may provide that the remote server sends a numeric code which is received by the signer user, not in the personal computer with which he/she is operating, but in his/her device for mobile communication. In order to proceed with the signature, the signer user sends the received numeric code through the personal computer to the remote server so that the server verifies the identity between the sent code and the received code and, in the affirmative case, the server validates the operation of encryption of the hash and obtains the digital signature. With this procedure it is not necessary for the user to effect a call.

For safety reasons, the method according to this invention may provide that after the server has effected the encryption of the hash and the consequent obtaining of the digital signature, the signer user may be notified by the server of the successful result of the operation and sends a text message to the device for mobile communication of the signer user.

Besides, the aims and advantages of this invention are achieved through a system to effect the qualified electronic signature of an electronic document by a signer user, comprising a computer (for instance a personal computer, a palmtop computer), a remote server connected with the computer, an electronic device for mobile communication (for instance, a cordless telephone comprising its telephone user) for each user who intends to effect the electronic signature. The system provides that an identification number is associated univocally to the electronic device for mobile communication and that the remote server may receive the hash of the document to be signed from the computer directly once it has been calculated by it: Otherwise, the remote server may calculate the hash on the base of the electronic document received by the computer. The remote server may communicate telephonically and comprises both a digital signature certificate for each signer user utilizing the system and a data base in which an identification code of a user is associated to an identification number of the device for mobile communication of the same user. Besides, said system provides that the software can send an identification code of the user to start the signature operations, and that a telephone communication is established between the user, through the electronic device for mobile communication, and the remote server and during said telephone communication the remote server verifies the match between the signer user in telephone communication and the sender of the identification code of the user. In case of an actual match, the remote server effects the encryption of the hash by means of the digital signature certificate corresponding to the user in telephone communication and obtains a digital signature.

Now, an operation of qualified electronic signature will be described according to a mode of realization of the method according to the invention.

Firstly, a user who wishes to sign electronic documents in a remote mode must request a digital signature certificate or private key to the competent certifying agency. While the public key of the user in question is placed to disposal of anyone wants to acquire it, the digital signature certificate or private key of the user is stored in a remote server safely.

In addition, the certifying office requests to the user an identification number of his/her mobile telephone service, for instance the telephone number and/or the IMSI code (SIM or USIM serial code), or an identification number of his/her device for mobile communication, for instance the IMEI code of the cordless telephone (serial code of the device). This identification number, namely the number of the telephone service or the number of the device, is called thereinafter identification telephone number.

Naturally, in case more codes are utilized together, the certifying office must be notified by the user of whatever change, in particular when the cordless telephone is replaced or when the number is changed or when the SIM/USIM card is replaced.

The certifying office associates the identification telephone number, namely one or more of the above mentioned codes, to the digital signature certificate of the same user, as well as to a user identifying code, so as to create a database containing the information of all the users with certified digital signature. This database is kept in the remote server which is equipped with a suited module for the telephone communication.

When the user needs to sign an electronic document, he/she calculates at first the hash of the document to be signed by utilizing the software installed in his/her computer, for instance a personal computer, and then, the user sends the hash, in case together with the document, to the remote server with which the computer is connected, for instance via Internet connection.

In case the remote server can calculate the hash of an electronic document, the user may send only the document to be signed to the same server so that the hash is obtained from the server directly.

When the computer sends the hash and/or the document to be signed through the software to the server, an identification code of the signer user is sent, as well. As a result of these operations, the server sends a telephone number to the user: this communication may take place by taking advantage of the connection between the server itself and the computer - in this case the software displays the telephone number- or the server, which can hold the telephone number of the users, sends a text message containing the telephone number to be called to the cordless telephone of the user in question.

Then, the signer user calls the indicated telephone number and is put in communication with the remote server. With this communication, the remote server verifies the identification telephone number of the calling user, namely the calling telephone number and/or other codes such as the IMSI code and/or the IMEI code. Thus, the server verifies whether the identification code of the user sent in the initial phases corresponds to the identification telephone number according to the data inserted in his/her database.

In the positive case, the remote server proceeds with the encryption of the hash in order to obtain the digital signature of the electronic document under process. For this operation, the server must utilize the digital signature certificate corresponding to the user identification code and the identification telephone number of the signer user, obtained from the communications between the computer and server and between the communication device and the server.

Then, the remote server sends the signature to the computer of the signer user. As an alternative, the server may send the signed document, namely the electronic document together with the digital signature, to another entity according to the instructions of the signer user; in this case, the sending operations to send a signed document are sped up.

The method and relative system according to the invention may provide that the remote server sends a text message to the device for mobile communication to notify the positive or negative result of the signature operation.

The fact that the server sends the telephone number to be called to the user allows the system to simultaneously manage more telephone numbers and consequently, more users.

According to a variant of the so-described method, in order to increase the safety level, during the communication with the server the signer user must send a secret code to the server.

Said secret code may be a static personal code, received from the certifying office on obtaining the digital signature certificate. Obviously, this personal code is stored in the database just next to the other identification numbers/codes of the user.

In addition, the secret code may be sent by the server to the computer or to the mobile device at the beginning of each signature operation, and the user must return said secret code to the server by utilizing a communication channel different from the reception channel.

According to another mode of realization of the method according to the invention, once the remote server holding the telephone numbers of the users has obtained the hash and received the identification code of the user, the remote server effects a call to the device for mobile communication associated to the same identification code. The signer user replying to the call sends a univocal recognizing code, assigned to it previously, to the remote server during the same telephone communication. If the inserted code corresponds to the one hold in the database of the server, the encryption of the hash is effected by means of the digital signature certificate corresponding to the user in telephone communication and obtains the digital signature.

Even in this case, the univocal recognizing code can be static, assigned an only time for all the operations, or it may vary and is sent at the beginning of each transaction.

Other variants and changes to the method and system according to the invention may be conceived but are to be considered as included in the scope of protection as defined by the following claims.

## Claims

1. Method to effect a qualified electronic signature of an electronic document by one or more signer users, wherein there is provided
a remote server, suited to telephonically communicate through a telephone network,
a computer connected to the remote server,
a software adapted to operate in the computer and in the server,
a respective digital signature certificate in possession of each of the one or more signer users stored in said remote server,
a respective electronic device for mobile communication associated to each of the one or more users to which an identification number is associated,
a database stored on the remote server containing an identification code of the signer user associated to said identification number,
said method comprising the following steps
- the signer user controls the beginning of the signature operation for the signature of the electronic document through the software by sending identification code to the remote server,
- the remote server receives or calculates a hash of the electronic document created by means of a hash calculus algorithm,
- the server authenticates the user and, in a positive case
- the remote server encrypts the hash through the digital signature certificate corresponding to the user and obtains the digital signature,
- the digital signature is inserted in the electronic document by the software;
**characterized in that** the method comprises the following steps:
- the remote server sends selectively a telephone number to the computer or to said electronic device for mobile communication, more telephone numbers corresponding to the remote server and receives a call from the one or more signer users through the electronic device for mobile communication whereby a telephone communication is established,
- the remote server verifies the match of the identification number received from the telephone network and the identification number associated to the signer user stored in the database.

2. Method according to claim 1, wherein the hash received by the server corresponds to the hash calculated at first from the electronic document to be signed by means of a hash calculus algorithm by the software utilized by the user, and sent by the computer to the remote server.

3. Method according to any of the foregoing claims, wherein the remote server sends the so-obtained digital signature to a personal computer of signer user.

4. Method according to any of the foregoing claims, wherein in case the identification code does not correspond with the identification number of the electronic device for mobile communication calling the remote server, the remote server itself sends a non-match message to the computer to communicate the non-correspondence and the impossibility of effecting a qualified electronic signature.

5. Method according to any of the foregoing claims, wherein the following phases are included:
- the remote server obtains the hash by calculating said hash from the electronic document sent by the user to the remote server through the software, through the software, the computer sends an identification code of the signer user to the remote server;
- the remote server communicates a telephone number to the user;
- the user dials the telephone number on the electronic device for mobile communication in his/her possession and establishes a communication with the remote server;
- during the communication, on the base of the database information, the remote server verifies the match between the identification code of the signer user and the calling identification number of the mobile communication device with which it has established the communication;
- in case of match between the identification code and the identification number, the remote server encrypts the hash obtained previously by utilizing the digital signature certificate and creates the digital signature of the electronic document.

6. Method according to claim 5, wherein the telephone number communicated by the remote server to the user is a number that has been sent by the remote server to the computer and visualized by the user through the software.

7. Method according to any of claims 5 or 6, wherein in addition to the telephone number to call, the remote server sends, to the computer, a numeric code visualized by the user and associated with the identification number of the device for mobile communication of the user and wherein during the communication with the remote server, the user strokes the numeric code visualized previously so that besides verifying the match between the identification code of signer user and the identification number of the calling mobile communication device with which it has established the communication, the remote server verifies the match of the identification code and calling identification number with the numeric code stroked by the user during the communication.

8. Method according to any of claims 5 to 7, wherein a personal secret code is associated with each signer user, said secret code being stored in the database of the remote server in association with the identification number of the device for mobile communication of the corresponding signer user and wherein during the communication with the remote server, the user sends his/her personal secret code so that the remote server verifies the match of the calling identification number of the device for mobile communication with the personal secret code stroked by the user during the communication.

9. Method according to any of claims 1 to 4, wherein the remote server calls the device for mobile communication and the signer user replying to the call through the device for mobile communication sends a univocal reference code through the same telephone communication to the remote server, said univocal reference code being assigned to the signer user before the beginning of the telephone communication so that it is possible to effect the encryption of the hash by means of the digital signature certificate which corresponds to the user in telephone communication and to obtain a digital signature.

10. Method according to claim 9, wherein the univocal recognizing code associated with the signer user is sent by the remote server to the computer after the beginning of the signature operations.

11. Method according to claim 9, wherein the univocal recognizing code associated with the signer user is assigned to the same user in the phase of assignment of his/her digital signature certificate.

12. Method according to any of the previous claims, wherein the remote server sends a numeric code to the mobile communication device of the signer user, which numeric code is then sent through the computer to the remote server by the same user so that the remote server itself verifies the identity between the sent code and the received code and in case of identity, the remote server confirms the operation of encryption of the hash and obtains the digital signature.

13. Method according to any of the previous claims, wherein after the remote server has carried out the encryption and obtained the digital signature, the remote server notifies the signer user by sending a text message to the mobile communication device of the same signer user.

14. System to effect a qualified electronic signature of an electronic document by one or more signer users, comprising:
a remote server, suited to telephonically communicate,
a computer connected to the remote server,
a respective digital signature certificate referred to each of the one or more signer users stored in said remote server,
a database stored on the remote server containing an identification code associated to said identification number for each signer user,
- a software for operating in the remote server and in the computer,
- an electronic device for mobile communication for each of the one or more signer user, to which an identification number is associated univocally;
- the software being suited to send the electronic document to sign and/or the hash calculated by said electronic document together with the user identification code, to receive one selective server telephone number, among more telephone numbers corresponding to the remote server, to establish a telephone communication between the user and the remote server through the electronic device for mobile communication, to verify during the telephone communication the match between the signer user in telephone communication and the user identification code, in case of an actual match, to encrypt in the remote server the hash through the digital signature certificate to obtain a digital signature, to insert the digital signature in the electronic document.

## Patentansprüche

1. Verfahren zur Ausführung einer qualifizierten elektronischen Signatur eines elektronischen Dokuments durch einen oder mehrere unterzeichnende User, wobei vorgesehen ist:
- ein für die telefonische Kommunikation über ein Telefon-Netzwerk geeigneter Remote-Server,
- ein mit dem Remote-Server verbundener Computer,
- eine in dem Computer und dem Server betreibbare Software,
- ein im Besitz eines jeden unterzeichnenden Users und auf dem Remote-Server abgespeichertes, entsprechendes digitales Signatur-Zertifikat,
- ein entsprechendes elektronisches Gerät zur mobilen Kommunikation für jeden der ein oder mehreren User mit zugeordneter Identifikations-Nummer,
- eine auf dem Remote-Server gespeicherte Datenbank, die einen Identifikations-Code des unterzeichnenden Users enthält, der der Identifikations-Nummer zugeordnet ist,
wobei das Verfahren die folgenden Schritte aufweist:
- der unterzeichnende User steuert den Start des Signier-Vorgangs für die Signatur des elektronischen Dokuments über die Software, indem er einen Identifikations-Code an den Remote-Server sendet,
- der Remote-Server empfängt oder berechnet einen Hash des elektronischen Dokuments, der mittels einem Hash-Berechnungs-Algorithmus erzeugt wird,
- der Server authentifiziert den User und, im positiven Fall,
- verschlüsselt der Remote-Server den Hash durch das zu dem User gehörende digitale Signatur-Zertifikat, und erhält die digitale Signatur,
- die digitale Signatur wird von der Software in das elektronische Dokument eingefügt;
**dadurch gekennzeichnet, dass** das Verfahren die folgenden Schritte aufweist:
- der Remote-Server sendet selektiv eine Telefonnummer an den Computer oder an das elektronische Gerät zur mobilen Kommunikation, mehrere Telefonnummern entsprechend an den Remote-Server und erhält einen Anruf von dem einen oder mehreren unterzeichnenden Usern über das elektronische Gerät zur mobilen Kommunikation, wobei eine telefonische Verbindung hergestellt wird,
- der Remote-Server verifiziert, ob die vom Telefon-Netzwerk erhaltene Identifikations-Nummer mit der Identifikations-Nummer übereinstimmt, die dem unterzeichnenden User laut Datenbank zugeordnet ist.

2. Verfahren gemäß Anspruch 1, wobei der vom Server empfangene Hash dem Hash entspricht, der zuerst von dem zu unterzeichnenden elektronischen Dokument mittels eines Hash-Berechnungs-Algorithmus in der vom User genutzten Software berechnet wurde und vom Computer an den Remote-Server gesendet wurde.

3. Verfahren gemäß einem der vorigen Ansprüche, wobei der Remote-Server die so erhaltene digitale Signatur an einen Personal Computer des unterzeichnenden Users sendet.

4. Verfahren gemäß einem der vorigen Ansprüche, wobei, im Fall, dass der Identifikations-Code nicht zu der Identifikations-Nummer des elektronischen Geräts zur mobilen Kommunikation, das den Remote-Server anruft, passt, der Remote-Server eine "Non-Match"-Meldung an den Computer sendet, um die Nicht-Übereinstimmung und die Unmöglichkeit der Ausführung einer qualifizierten elektronischen Signatur zu melden.

5. Verfahren gemäß einem der vorigen Ansprüche, wobei die folgenden Abschnitte eingeschlossen sind:
- der Remote-Server erhält den Hash, durch Berechnung des Hash des elektronischen Dokuments mittels der Software, das der User mittels der Software an den Remote-Server gesendet hat, wobei der Computer einen Identifikations-Code des unterzeichnenden Users an den Remote-Server sendet;
- der Remote-Server übermittelt eine Telefonnummer an den User;
- der User wählt die Telefonnummer auf seinem / ihrem eigenen elektronischen Gerät zur mobilen Kommunikation und stellt eine Verbindung mit dem Remote-Server her;
- während der Verbindung verifiziert der Remote-Server auf Grundlage der Datenbank-Informationen die Übereinstimmung von Identifikations-Code des unterzeichnenden Users und der rufenden Identifikations-Nummer des elektronischen Geräts zur mobilen Kommunikation, mit dem die Verbindung hergestellt wurde;
- im Fall der Übereinstimmung von Identifikations-Code und Identifikations-Nummer verschlüsselt der Remote-Server den zuvor erhaltenen Hash durch Verwenden des digitalen Signatur-Zertifikats und erzeugt die digitale Signatur des elektronischen Dokuments.

6. Verfahren gemäß Anspruch 5, wobei die vom Remote-Server an den User übermittelte Telefonnummer eine Nummer ist, die vom Remote-Server an den Computer gesendet wurde und durch den User über die Software sichtbar gemacht wird.

7. Verfahren gemäß einem der Ansprüche 5 oder 6, wobei zusätzlich zur zu wählenden Telefonnummer der Remote-Server an den Computer einen numerischen Code sendet, der durch den User sichtbar gemacht wird und der zur Identifikations-Nummer des Gerätes zur mobilen Kommunikation des Users zugehörig ist, wobei während der Kommunikation mit dem Remote-Server der User den zuvor visualisierten numerischen Code eintippt, sodass neben der Verifizierung der Übereinstimmung zwischen dem Identifikations-Code des unterzeichnenden Users und der Identifikations-Nummer des rufenden mobilen Kommunikationsgerätes, mit dem die Verbindung hergestellt wurde, der Remote-Server die Übereinstimmung zwischen dem Identifikations-Code und der rufenden Identifikations-Nummer mit dem vom User während der Verbindung eingetippten numerischen Code verifiziert.

8. Verfahren gemäß einem der Ansprüche 5 bis 7, wobei zu jedem unterzeichnenden User ein persönlicher Geheimcode gehört, der in der Datenbank des Remote-Servers in Zusammenhang mit der Identifikations-Nummer des mobilen Kommunikationsgerätes des zugehörigen unterzeichnenden Users gespeichert ist, wobei während der Verbindung mit dem Remote-Server der User seinen / ihren Geheimcode sendet, so dass der Remote-Server die Übereinstimmung der rufenden Identifikations-Nummer des mobilen Kommunikationsgerätes mit dem vom User während der Verbindung eingetippten, persönlichen Geheimcode verifiziert.

9. Verfahren gemäß einem der Ansprüche 1 bis 4, wobei der Remote-Server das mobile Kommunikationsgerät anruft und der unterzeichnende User, der auf den Anruf über das mobile Kommunikationsgerät antwortet, einen eindeutigen Referenzcode über dieselbe Telefonverbindung an den Remote-Server sendet, wobei der eindeutige Referenzcode vor Beginn der Telefonverbindung dem unterzeichnenden User zugewiesen wird, so dass es möglich ist, die Verschlüsselung des Hashs durch das digitale Signatur-Zertifikat, das dem User bei der Telefonverbindung entspricht, durchzuführen und die digitale Signatur zu erhalten.

10. Verfahren gemäß Anspruch 9, wobei der zum unterzeichnenden User gehörige eindeutige Erkennungscode nach Beginn des Signier-Vorgangs vom Remote-Server an den Computer gesendet wird.

11. Verfahren gemäß Anspruch 9, wobei der zum unterzeichnenden User gehörige eindeutige Erkennungscode demselben User in der Phase der Zuordnung seines / ihres digitalen Signatur-Zertifikats zugeordnet wird.

12. Verfahren gemäß einem der vorigen Ansprüche, wobei der Remote-Server einen numerischen Code an das mobile Kommunikationsgerät des unterzeichnenden Users sendet, dessen numerischer Code daraufhin von demselben User über den Computer an den Remote-Server gesendet wird, der die Übereinstimmung zwischen dem gesendeten und dem empfangenen Code verifiziert und, im Falle der Übereinstimmung, die Verschlüsselung des Hashs bestätigt und die digitale Signatur erhält.

13. Verfahren gemäß einem der vorigen Ansprüche, wobei, nachdem der Remote-Server die Verschlüsselung durchgeführt und die digitale Signatur erhalten hat, er den unterzeichnenden User durch Senden einer Textnachricht auf dessen mobiles Kommunikationsgerät benachrichtigt.

14. Anordnung zur Ausführung einer qualifizierten elektronischen Signatur eines elektronischen Dokuments durch einen oder mehrere unterzeichnende User, aufweisend:
- einen für die telefonische Kommunikation geeigneten Remote-Server,
- einen mit dem Remote-Server verbundenen Computer,
- ein für jeden der ein oder mehreren User entsprechendes digitales Signatur-Zertifikat, das auf dem Remote-Servergespeichert ist,
- eine auf dem Remote-Server gespeicherte Datenbank, die einen Identifikations-Code enthält, der der Identifikations-Nummer eines jeden unterzeichnenden Users zugeordnet ist,
- eine Software für den Betrieb im Remote-Server und im Computer,
- ein elektronisches Gerät zur mobilen Kommunikation für jeden der ein oder mehreren unterzeichnenden User, dem / denen eine eindeutige Identifikations-Nummer zugeordnet ist;
- wobei die Software geeignet ist, das zu unterzeichnende elektronische Dokument und / oder den von dem elektronischen Dokument berechneten Hash zusammen mit dem User-Identifikations-Code zu versenden, um eine ausgewählte Server-Telefonnummer unter mehreren zum Remote-Server gehörigen Telefonnummern zu empfangen, um eine Telefonverbindung zwischen dem User und dem Remote-Server über das elektronische Gerät zur mobilen Kommunikation aufzubauen, um während der Telefonverbindung die Übereinstimmung zwischen dem unterzeichnenden User und dem User-Identifikations-Code zu verifizieren, dabei im Falle einer Übereinstimmung den Hash in dem Remote-Server durch das digitale Signatur-Zertifikat zu verschlüsseln, um eine digitale Signatur zu erhalten und die digitale Signatur in das elektronische Dokument einzufügen.

## Revendications

1. Procédé pour effectuer une signature électronique qualifiée d'un document électronique par un ou plusieurs utilisateurs signataires, dans lequel il est prévu
un serveur à distance, adapté pour communiquer par voie téléphonique par le biais d'un réseau téléphonique,
un ordinateur connecté au serveur à distance,
un logiciel adapté pour fonctionner dans l'ordinateur et dans le serveur,
un certificat de signature numérique respectif en possession de chacun des un ou plusieurs utilisateurs signataires, stocké dans ledit serveur à distance,
un dispositif électronique de communication mobile respectif associé à chacun des un ou plusieurs utilisateurs, auquel un numéro d'identification est associé,
une base de données stockée sur le serveur à distance, contenant un code d'identification de l'utilisateur signataire associé audit numéro d'identification,
ledit procédé comprenant les étapes suivantes
- l'utilisateur signataire commande le début de l'opération de signature pour la signature du document électronique par le biais du logiciel en envoyant un code d'identification au serveur à distance,
- le serveur à distance reçoit ou calcule un hachage du document électronique créé au moyen d'un algorithme de calcul de hachage,
- le serveur authentifie l'utilisateur et, dans un cas positif
- le serveur à distance crypte le hachage par le biais du certificat de signature numérique correspondant à l'utilisateur et obtient la signature numérique,
- la signature numérique est insérée dans le document électronique par le logiciel ;
**caractérisé en ce que** le procédé comprend les étapes suivantes :
- le serveur à distance envoie de manière sélective un numéro de téléphone à l'ordinateur ou audit dispositif électronique de communication mobile, plusieurs numéros de téléphone correspondant au serveur à distance, et reçoit un appel provenant des un ou plusieurs utilisateurs signataires par le biais du dispositif électronique de communication mobile, moyennant quoi une communication téléphonique est établie,
- le serveur à distance vérifie la correspondance du numéro d'identification reçu à partir du réseau téléphonique et du numéro d'identification associé à l'utilisateur signataire stocké dans la base de données.

2. Procédé selon la revendication 1, dans lequel le hachage reçu par le serveur correspond au hachage calculé au début à partir du document électronique à signer au moyen d'un algorithme de calcul de hachage par le logiciel utilisé par l'utilisateur et envoyé par l'ordinateur au serveur à distance.

3. Procédé selon l'une quelconque des revendications précédentes, dans lequel le serveur à distance envoie la signature numérique ainsi obtenue à un ordinateur personnel d'un utilisateur signataire.

4. Procédé selon l'une quelconque des revendications précédentes, dans lequel, dans le cas où le code d'identification ne correspond pas au numéro d'identification du dispositif électronique de communication mobile appelant le serveur à distance, le serveur à distance lui-même envoie un message de non correspondance à l'ordinateur pour communiquer la non correspondance et l'impossibilité d'effectuer une signature électronique qualifiée.

5. Procédé selon l'une quelconque des revendications précédentes, dans lequel les phases suivantes sont inclusses :
- le serveur à distance obtient le hachage en calculant ledit hachage à partir du document électronique envoyé par l'utilisateur au serveur à distance par le biais du logiciel, par le biais du logiciel, l'ordinateur envoie un code d'identification de l'utilisateur signataire au serveur à distance ;
- le serveur à distance communique un numéro de téléphone à l'utilisateur ;
- l'utilisateur compose le numéro de téléphone sur le dispositif électronique de communication mobile en sa possession et établit une communication avec le serveur à distance ;
- durant la communication, sur la base des informations de base de données, le serveur à distance vérifie la correspondance entre le code d'identification de l'utilisateur signataire et le numéro d'identification d'appelant du dispositif de communication mobile avec lequel il a établi la communication ;
- en cas de correspondance entre le code d'identification et le numéro d'identification, le serveur à distance crypte le hachage obtenu précédemment en utilisant le certificat de signature numérique et crée la signature numérique du document électronique.

6. Procédé selon la revendication 5, dans lequel le numéro de téléphone communiqué par le serveur à distance à l'utilisateur est un numéro qui a été envoyé par le serveur à distance à l'ordinateur et visualisé par l'utilisateur par le biais du logiciel.

7. Procédé selon la revendication 5 ou 6, dans lequel, en plus du numéro de téléphone à appeler, le serveur à distance envoie, à l'ordinateur, un code numérique visualisé par l'utilisateur et associé au numéro d'identification du dispositif de communication mobile de l'utilisateur et dans lequel, durant la communication avec le serveur à distance, l'utilisateur frappe le code numérique précédemment visualisé de manière que, en plus de vérifier la correspondance entre le code d'identification de l'utilisateur signataire et le numéro d'identification du dispositif de communication mobile appelant avec lequel il a établi la communication, le serveur à distance vérifie la correspondance entre le code d'identification et le numéro d'identification d'appelant avec le code numérique frappé par l'utilisateur durant la communication.

8. Procédé selon l'une quelconque des revendications 5 à 7, dans lequel un code secret personnel est associé à chaque utilisateur signataire, ledit code secret étant stocké dans la base de données du serveur à distance en association avec le numéro d'identification du dispositif de communication mobile de l'utilisateur signataire correspondant et dans lequel, durant la communication avec le serveur à distance, l'utilisateur envoie son code secret personnel de manière que le serveur à distance vérifie la correspondance du numéro d'identification d'appelant du dispositif de communication mobile avec le code secret personnel frappé par l'utilisateur durant la communication.

9. Procédé selon l'une quelconque des revendications 1 à 4, dans lequel le serveur à distance appelle le dispositif de communication mobile et l'utilisateur signataire répondant à l'appel par le biais du dispositif de communication mobile envoie un code de référence univoque par le biais de la même communication téléphonique au serveur à distance, ledit code de référence univoque étant attribué à l'utilisateur signataire avant le début de la communication téléphonique de manière qu'il soit possible d'effectuer le cryptage du hachage au moyen du certificat de signature numérique qui correspond à l'utilisateur en communication téléphonique et d'obtenir une signature numérique.

10. Procédé selon la revendication 9, dans lequel le code de reconnaissance univoque associé à l'utilisateur signataire est envoyé par le serveur à distance à l'ordinateur après le début des opérations de signature.

11. Procédé selon la revendication 9, dans lequel le code de reconnaissance univoque associé à l'utilisateur signataire est attribué au même utilisateur dans la phase d'attribution de son certificat de signature numérique.

12. Procédé selon l'une quelconque des revendications précédentes, dans lequel le serveur à distance envoie un code numérique au dispositif de communication mobile de l'utilisateur signataire, lequel code numérique est ensuite envoyé par l'intermédiaire de l'ordinateur au serveur à distance par le même utilisateur de manière que le serveur à distance lui-même vérifie l'identité entre le code envoyé et le code reçu et, en cas d'identité, le serveur à distance confirme l'opération de cryptage du hachage et obtient la signature numérique.

13. Procédé selon l'une quelconque des revendications précédentes, dans lequel, après que le serveur à distance a exécuté le cryptage et obtenu la signature numérique, le serveur à distance notifie l'utilisateur signataire en envoyant un message textuel au dispositif de communication mobile de ce même utilisateur signataire.

14. Système pour effectuer une signature électronique qualifiée d'un document électronique par un ou plusieurs utilisateurs signataires, comprenant :
un serveur à distance, adapté pour communiquer par voie téléphonique,
un ordinateur connecté au serveur à distance,
un certificat de signature numérique respectif se référant à chacun des un ou plusieurs utilisateurs signataires, stocké dans ledit serveur à distance,
une base de données stockée sur le serveur à distance, contenant un code d'identification associé audit numéro d'identification pour chaque utilisateur signataire,
- un logiciel pour fonctionner dans le serveur à distance et dans l'ordinateur,
- un dispositif électronique de communication mobile pour chacun des un ou plusieurs utilisateurs signataires, auquel un numéro d'identification est associé de manière univoque ;
- le logiciel étant adapté pour envoyer le document électronique à signer et/ou le hachage calculé par ledit document électronique conjointement au code d'identification d'utilisateur, pour recevoir un numéro de téléphone de serveur sélectif, parmi plusieurs numéros de téléphone correspondant au serveur à distance, pour établir une communication téléphonique entre l'utilisateur et le serveur à distance par le biais du dispositif électronique de communication mobile, pour vérifier, durant la communication téléphonique, la correspondance entre l'utilisateur signataire en communication téléphonique et le code d'identification d'utilisateur, en cas de correspondance effective, pour crypter le hachage dans le serveur à distance par le biais du certificat de signature numérique pour obtenir une signature numérique, pour insérer la signature numérique dans le document électronique.
